## Europäisches Patentamt

## European Patent Office

## Office européen des brevets

(19)

(11) Veröffentlichungsnummer: **0 060 390**
**A1**

(12) **EUROPÄISCHE PATENTANMELDUNG**

(21) Anmeldenummer: **82100989.1**

(22) Anmeldetag: **11.02.82**

(51) Int. Cl.³: **B 60 K 20/10,** F 16 H 5/28, F 16 H 5/60, F 16 H 5/74

(30) Priorität: **13.03.81 AT 1163/81**

(43) Veröffentlichungstag der Anmeldung: **22.09.82**
**Patentblatt 82/38**

(84) Benannte Vertragsstaaten: **BE CH DE FR GB IT LI LU NL SE**

(71) Anmelder: **Delwing, Dieter, Im Rötel 21, CH-6300 Zug (CH)**

(72) Erfinder: **Der Erfinder hat auf seine Nennung verzichtet**

(74) Vertreter: **Neubauer, Hans-Jürgen, Dipl.-Phys., Schillerstrasse 83a, D-8070 Ingolstadt (DE)**

(54) Selbsttätig wirkende Schaltvorrichtung für die Gänge eines Mehrstufenfahrzeuggetriebes.

(57) Die Erfindung bezieht sich auf ein automatisches Getriebe, das energiesparend geschaltet werden kann und jederzeit auch eine Schaltung der Gänge von Hand möglich ist. Dazu sind zur Betätigung eines Schaltfingers (17) in beiden Schaltrichtungen zwei hydraulische Arbeitszylinder (1, 1a) vorgesehen, von denen der eine (1) zum Einschalten der Gänge in Druckräumen (2, 3) einen doppelwirkenden Kolben (4) enthält und der andere (1a) zum Ausschalten der Gänge zwei, auf der Kolbenstange (11) frei verschiebbare Schleppkolben (7, 8) aufweist. Die Schleppkolben (7, 8) sind voneinander durch einen auf der Kolbenstange (11) vorgesehenen Anschlag (9) getrennt, wobei im Schleppkolbenzylinder (1a) ein entsprechender Ansatz oder Anschlag (10) vorgesehen ist, so daß zwischen den Stirnseiten des Zylinders (1) und den auf der Kolbenstange beweglichen Schleppkolben (7 bzw. 8) Druckräume (5 bzw. 6) entstehen, die durch einen Überströmkanal verbunden sind und über einen Anschluß (14) Verbindung mit den Steuerventilen (34) haben. Die Druckräume sind nur während der Betätigung ihrer Kolben mit der Druckleitung verbunden, so daß die Kolben sonst frei beweglich sind.

**DIPL.-PHYS. H.-J. NEUBAUER**

Herr
Dieter Delwing
Am Rötel 21

CH-6300 Zug

**PATENTANWALT**
BEIM EUROPÄISCHEN PATENTAMT
ZUGELASSENER VERTRETER

Schillerstraße 83
D-8070 Ingolstadt
Telefon 08 41 / 5 99 99

P 29DE/82/35

1

# Selbsttätig wirkende Schaltvorrichtung für die Gänge eines Mehrstufenfahrzeuggetriebes

Die Erfindung betrifft eine selbsttätig wirkende Schaltvorrichtung für die Gänge eines Mehrstufenfahrzeuggetriebes bestehend aus einem an eine Förderpumpe angeschlossenen hydraulischen Servomotor, der mittels eines Schaltfingers die Schaltorgane des Getriebes betätigt, des weiteren aus durch Elektromagnete betätigten Steuerventilen zur Steuerung des Servomotors, sowie aus einem durch ein Fahrzeugrad synchron angetriebenen Impulsgeber zur Erzeugung einer der Geschwindigkeit proportionalen Impulsfolge und einer nachgeschalteten Elektronikeinheit, die die Steuerströme zur Betätigung der Elektromagnete abgibt.

Die bekannten vollautomatischen Getriebe, die mit Zugkraftschaltung arbeiten, werden für mehr als drei Gänge aufwendig. Sie sind dann teuer und verursachen einen Mehrverbrauch an Brennstoff, so daß sie für neuzeitliche, brennstoffsparende Kraftfahrzeuge schlecht geeignet sind.

Aufgabe der Erfindung ist es, ein automatisches Getriebe zu schaffen, das brennstoffsparend auch für schwachmotorisierte Fahrzeuge geeignet ist, bei dem jederzeit auch das Schalten der Gänge mit der Hand, d. h. der Eingriff in die automatischen Vorgänge, möglich ist und das so gestaltet ist, daß es als Zusatzgerät in Motorfahrzeuge nachträglich ohne Änderungen anderer Konstruktionen eingebaut werden kann. Schließlich sollte der Energiebedarf durch den Betrieb des automatischen Getriebes möglichst gering sein, um den Gesamtenergiehaushalt des Fahrzeugs nur gering zu belasten.

Diese Aufgabe wird dadurch gelöst, daß bei einem eingangs beschriebenen Getriebe zum Betätigen des Schaltfingers in beiden Schaltrichtungen zwei hydraulische Arbeitszylinder vorgesehen sind, von denen der eine zum Einschalten der Gänge in Druckräumen einen doppelwirkenden Kolben enthält und der andere zum Ausschalten der Gänge zwei, auf der Kolbenstange frei verschiebbare Schleppkolben aufweist, die voneinander durch einen auf der Kolbenstange vorgesehenen Anschlag oder Bund getrennt sind, wobei im Schleppkolbenzylinder ein entsprechender Ansatz oder Anschlag vorgesehen ist, so daß zwischen den Stirnseiten des Zylinders und den auf der Kolbenstange beweglichen Schleppkolben zwei Druckräume entstehen, die durch einen Überströmkanal verbunden sind und über einen Anschluß Verbindung mit den Steuerventilen haben, wobei alle Druckräume nur während der Betätigung ihrer Kolben mit der Druckleitung, sonst aber mit der Abflußleitung verbunden sind, so daß die Kolben frei beweglich sind.

Zum Schalten eines Ganges genügt es, nur den linken oder rechten Druckraum des Gangschaltkolbens kurzzeitig mit der Druckleitung zu verbinden und zum Ausschalten eines Ganges brauchen nur die miteinander verbundenen Druckräume der beiden Schleppkolben kurzzeitig mit der Druckleitung verbunden werden. Dadurch wird die Steuerung der Gangschaltung außerordentlich vereinfacht und Energie nur während der kurzen Schaltzeiten verbraucht. Bei bekannten Getrieben wird zum Bewegen des Schaltfingers aus der Nullage heraus, d. h. zum Einlegen eines Ganges, ein pneumatischer oder hydraulischer Doppelzylinder benutzt, der durch eine Feder in seiner Mittellage, d. h. im Leerlauf, gehalten wird. Zum Einlegen des Ganges wird der Kolben mit Druckmedium beaufschlagt, das so lange anstehen muß, so lange der Gang geschaltet ist. Dadurch wird der Energiehaushalt des Fahrzeugs belastet.

Ein weiterer Vorteil der Erfindung liegt darin, daß die Kolben nur während des automatischen Schaltvorgangs mit Druck beaufschlagt sind, sonst sind sie drucklos und können frei bewegt werden. Somit ist jederzeit der in einer bevorzugten Ausführungsform verkürzt beibehaltene Handschalthebel bewegbar. Der Fahrer kann somit in Gefahrensituationen oder bei Störungen an der Automatik das Fahrzeug von Hand schalten. Dies trägt wesentlich zu einer sicheren Handhabung der Schaltvorrichtung bei. Bei den bekannten Schaltvorrichtungen, bei denen die Schaltkolben bei eingelegtem Gang immer druckbeaufschlagt sind, ist dies nicht möglich.

Ein weiterer Vorteil der Erfindung wird darin gesehen, daß die unmittelbare Betätigung des Schaltfingers durch die Kolben der Arbeitszylinder den nachträglichen Einbau der Schaltvorrichtung in ein handgeschaltetes Fahrzeug einfach ermöglicht, wobei der mit der Hand zu betätigende Schaltknüppel beibehalten werden kann.

Ein weiteres Merkmal der Erfindung besteht darin, daß zum Steuern des Servomotors drei durch Elektromagnete betätigte, unter Federbelastung stehende Ventile, eines von diesen für die Schleppkolbendruckräume und je eines für die Druckräume des Gangschaltkolbens, dienen.

Anhand von Ausführungsbeispielen sind weitere wertvolle Merkmale und Vorteile der Erfindung beschrieben.

Es zeigen

Fig. 1 den hydraulischen Servomotor,

Fig. 2 den Schaltfinger im Querschnitt,

Fig. 3 den Schaltfinger im Längsschnitt,

Fig. 4 den Ventilsteuerblock im Längsschnitt,

Fig. 5 dasselbe im Querschnitt,

Fig. 6 die Lage der Schaltgassen,

Fig. 7 eine durch das Fahrzeugrad angetriebene Lochscheibe mit elektronischer Abtastung zur Erzeugung einer der Fahrzeuggeschwindigkeit entsprechenden Impulsfrequenz,

Fig. 8 dasselbe im Querschnitt,

Fig. 9 die durch die Fahrgeschwindigkeitsbereiche gesteuerten Getriebegänge,

Fig. 10 den elektrischen Schaltplan.

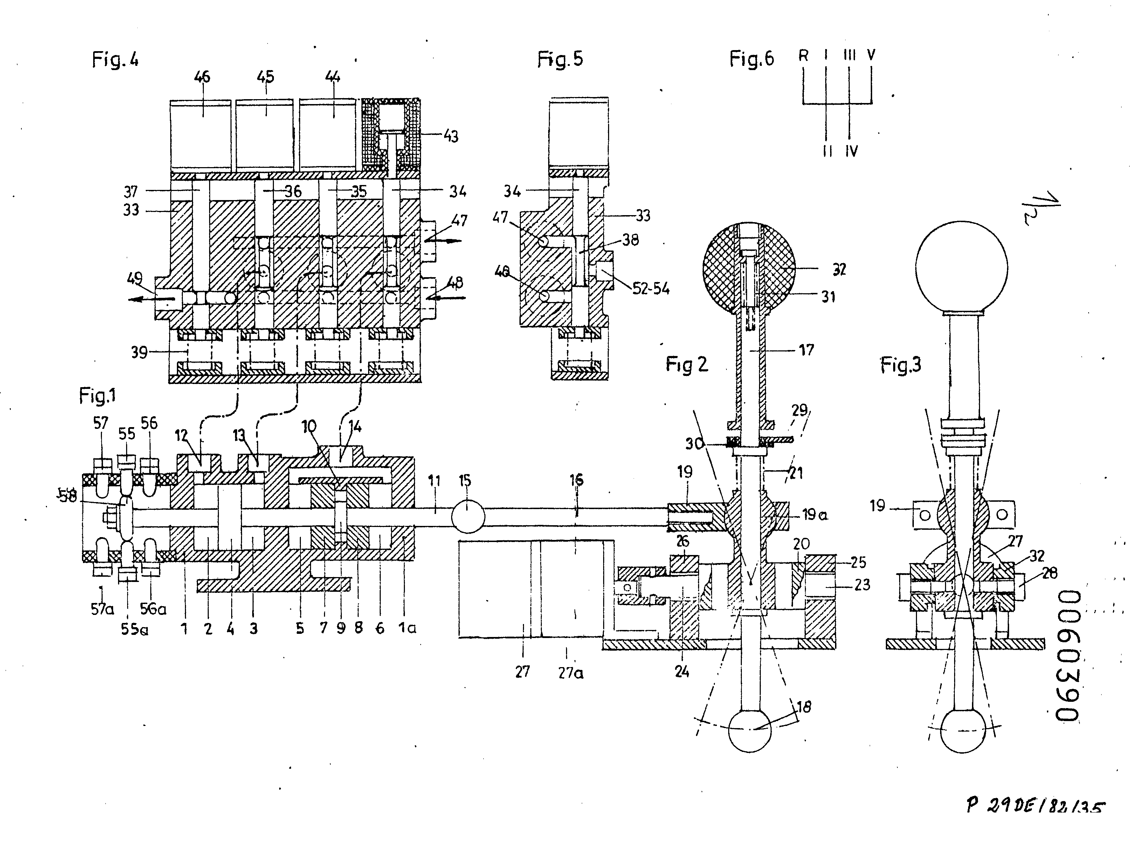

Nach Fig. 1 bewegt sich in einem hydraulischen Servomotor 1 ein Gangschaltkolben 4 in beiden Richtungen und
wirkt mit seiner Kolbenstange 11 über eine Schaltstange
16 auf einen die Gänge schaltenden Schaltfinger 17. Der
Gangschaltkolben 4 weist zwei Druckräume 2 und 3 auf,
die über Anschlußstutzen 12, 13 mit Steuerventilen 35,36
verbunden sind. Koaxial zu dem Gangschaltzylinder 1a ist
der Gangausschaltzylinder 1 mit seinen beiden Druckräumen 5, 6 angeordnet, in denen sich auf der Kolbenstange
11 zwei auf dieser frei bewegliche Schleppkolben 7, 8
befinden.

An der Kolbenstange 11 befindet sich ein Bund 9 und im Zylinder 1 in der Mitte entsprechend ein Ansatz 10, die beide die Bewegung der Schleppkolben nach der Mitte begrenzen. Die Breite des Ansatzes 10 entspricht der Breite des Bundes 9. Die beiden Druckräume 5, 6 sind mit dem Anschlußstutzen 14 verbunden, über den sie gemeinsam an ein Steuerventil 34 angeschlossen sind.

Zum Schalten der Gänge genügt es, entweder den Druckraum 2 oder den Druckraum 3 mit der Druckleitung 12 oder 13 zu verbinden, der Kolben 4 und damit die Kolbenstange 11 werden in die entsprechende Richtung geschoben und der Schaltfinger 17 in die gewünschte Richtung bewegt. Wird der Kolben 4 z. B. nach rechts verschoben, verschiebt sich mit Hilfe des Bundes 9 der Kolbenstange 11 der rechte Schleppkolben 8, wobei der andere Schleppkolben 7 an seiner Stelle bleibt. Werden die beiden Druckräume 5 und 6 gemeinsam mit der Druckleitung 14 verbunden, wird der mit der Kolbenstange 11 nach rechts verschobene Schleppkolben 8 in die Richtung des Ansatzes 10 gedrückt, wobei der Schleppkolben am Bund 9 anliegend auch die Kolbenstange 11 verschiebt, so daß der Gangschaltkolben 4 ebenfalls in die Mittellage gebracht und der eingelegte Gang ausgeschaltet wird, indem der Schaltfinger wieder in seine Mittellage geht. Derselbe Vorgang spielt sich ab, falls der Gangschaltkolben 4 nach links bewegt wird und der linke Schleppkolben 7 verschoben wird, der dann unter Druck gesetzt die Kolbenstange 11 wieder in ihre Mittellage bringt.

Nach Fig. 2 erfolgt das Schalten der Gänge mit dem Schaltfinger 17, der mit seinem unteren Ende 18 in die Schaltstange des nicht dargestellten Getriebes eingreift. Er dient gleichzeitig auch als handbetätigter Schaltknüppel und wird an dessen Stelle montiert. Der Schaltfinger 17 ist als Kreuzgelenk 20 mit Achsen 28 in der einen Ebene und mit Achsen 23, 24 in der anderen Ebene gelagert, so daß er nach allen Richtungen bewegt werden kann. Die Bewegung in Längsachse des Fahrzeuges dient für das Schalten der Gänge und die Querbewegung für die Schaltgassenwahl, wozu die Gelenksachse 23 und 24 des Schaltfingers 17 nach rechts oder nach links verdreht werden muß; die meistgefahrenen Gänge III und IV liegen in der mittleren Schaltgasse, in der der Schaltfinger 17 durch die Getriebeschaltstange federnd gehalten wird.

Zum Verdrehen der Schaltfingerachse in beide Richtungen dienen zwei Drehmagnete 27 bzw. 27a, die unter Strom gesetzt den Schaltfinger 17 in die eine oder in die andere Richtung verdrehen. Der Schaltfinger 17 wird für die Gangschaltung mit der Kolbenstange 11 des Servomotors über ein Kugelgelenk 15 und eine Schaltstange 16 bewegt, indem die Schaltstange 16 mit ihrer Kugelpfanne 19 an der Kugel 19a des Schaltfingers 17 angreifend, mit dieser gelenkig verbunden ist. Der Schaltfinger 17 ist gleichzeitig auch als Handschaltknüppel 32 ausgebildet, so daß das Getriebe jederzeit auch mit Hand geschaltet werden kann.

Die Betätigung der Schaltzylinder setzt voraus, daß die Druckräume alternierend mit der Druckleitung oder mit der Abflußleitung verbunden werden und daß, falls einer der Druckräume mit der Druckleitung verbunden wird, die anderen Druckräume mit der Abflußleitung verbunden sein müssen.

Nach Fig. 4 dient zur Steuerung des Servomotors 1, 1a ein Steuerventilblock 33, in dem vier Ventilstössel 34, 35, 36 und 37 durch je einen Elektromagneten 43, 44, 45 und 46 gegen Federn 39 bewegt werden können. Drei von diesen Ventilstösseln 34, 35, 36 dienen zur Steuerung des Servomotors, und der vierte Ventilstössel 37 steuert das Unterdrucksetzen des Servomotors. Die Ringräume 38 der Stössel verbinden in der Ruhelage die zu ihnen führende gemeinsame Abflußleitung 47 über einen Anschlußstutzen 52 mit dem zugehörigen Druckraum des Servomotors 1, 1a. Wird der Ventilstössel niedergedrückt, verbindet sein Ringraum 38 den zu ihm gehörenden Druckraum über den Anschlußstutzen 52 mit der gemeinsamen Druckleitung 48, bei gleichzeitiger Unterbrechung der Verbindung mit der Abflußleitung 47.

Die Anschlußstutzen 52, 53, 54, von denen in Fig. 5 nur einer dargestellt ist, sind wie folgt verbunden: Der Stutzen 52 des Stössels 34 mit dem Anschlußstutzen 14 der Gangausschaltzylinderräume 5, 6, der Anschlußstutzen 53 über den Anschlußstutzen 13 mit dem Druckraum 3 und der Anschlußstutzen 54 mit dem Druckraum 2 des Gangschaltkolbens 4.

An der Verlängerung der Kolbenstange 11 ist eine Kontaktscheibe 58 angebracht und ihr zugehörend sechs federnde Kontakte 55, 56, 57 bzw. 55a, 56a, 57a. Die Kontakte 55, 55a sind in der Mittellage des Gangschaltkolbens 4 geschlossen und die Kontakte 56, 56a und 57, 57a sind in einer der Endlagen, d. h. bei einem eingelegten Gang, geschlossen.

Die Massenanschlüsse der Elektromagneten 44, 45, die zu den Ventilstössein 35, 36 für die Steuerung des Gangschaltkolbens 4 gehören, sind an den Mittelkontakt 55 angeschlossen; diese Magnete können daher nur in der Mittellage des Gangschaltkolbens 4 betätigt werden und der Massenanschluß des Magneten 43, der zur Betätigung des Gangausschaltzylinders dient, ist über die beiden Endkontakte 56, 57 geleitet.

Zum Schalten eines Ganges wird der diesem Gang entsprechende Elektromagnet und gleichzeitig auch der den Ausschaltzylinder betätigende Elektromagnet 43 unter Spannung gesetzt. Ist in diesem Moment ein Gang eingeschaltet, so wird über einen der Endkontakte 57, 58 erst dieser Gang ausgeschaltet, indem der den Gangausschaltzylinder steuernde Elektromagnet 43 Massenanschluß bekommt. Erst wenn hierdurch die Kolbenstange 11 in ihre Mittellage gebracht wurde, d. h. der eingelegte Gang ausgeschaltet und das Getriebe auf Leerlauf geschaltet ist, wird über den Mittelkontakt 55 der mit der Plusleitung verbundene Gangeinschaltmagnet 44 oder 45 Massenkontakt erhaltend betätigt und damit der gewünschte Gang eingelegt. Es kann daher aus jedem eingelegten Gang in jeden anderen gewünschten Gang geschaltet werden, auch dann, falls der alte und neue Gang sich in der gleichen Schaltrichtung befinden.

Der vierte Ventilstössel 37 verbindet die Druckleitung 48 der drei Ventilstössel 34, 35, 36 mit der Abflußleitung 49, so daß, falls nicht geschaltet wird, die Ölpumpe unbelastet ist. Wird aber dieser Ventilstössel 37 betätigt, unterbricht er die Verbindung zu der Abflußleitung und in der Druckleitung der Ölpumpe entsteht Druck, mit dem der Servomotor betätigt werden kann. Der diesen vierten Ventilstössel betätigende Elektromagnet 46 wird immer gleichzeitig mit den anderen Elektromagneten unter Strom gesetzt, so daß, nachdem der Strom nach durchgeführter Schaltung unterbrochen wird, die Leitung von der Ölpumpe zum Steuerventilblock mit der Abflußleitung verbunden wird. Dadurch werden alle Druckräume im Servomotor mit der Abflußleitung verbunden, so daß der Gangschaltkolben 4, wie auch die beiden Schleppkolben 7, 8 frei bewegbar sind. Wie ersichtlich hat diese Anordnung zwei große Vorteile, einerseits, daß die Ölpumpe nur während der kurzen Zeit des Umschaltens belastet ist, andererseits, daß der Schaltfinger mit der Hand in jeder Richtung frei bewegt werden kann. Auf diese Weise ist die Möglichkeit gegeben, daß eine Gangschaltung jederzeit auch unabhängig von der Automatik vom Fahrer durch die Betätigung des Handschaltknüppels vorgenommen werden kann.

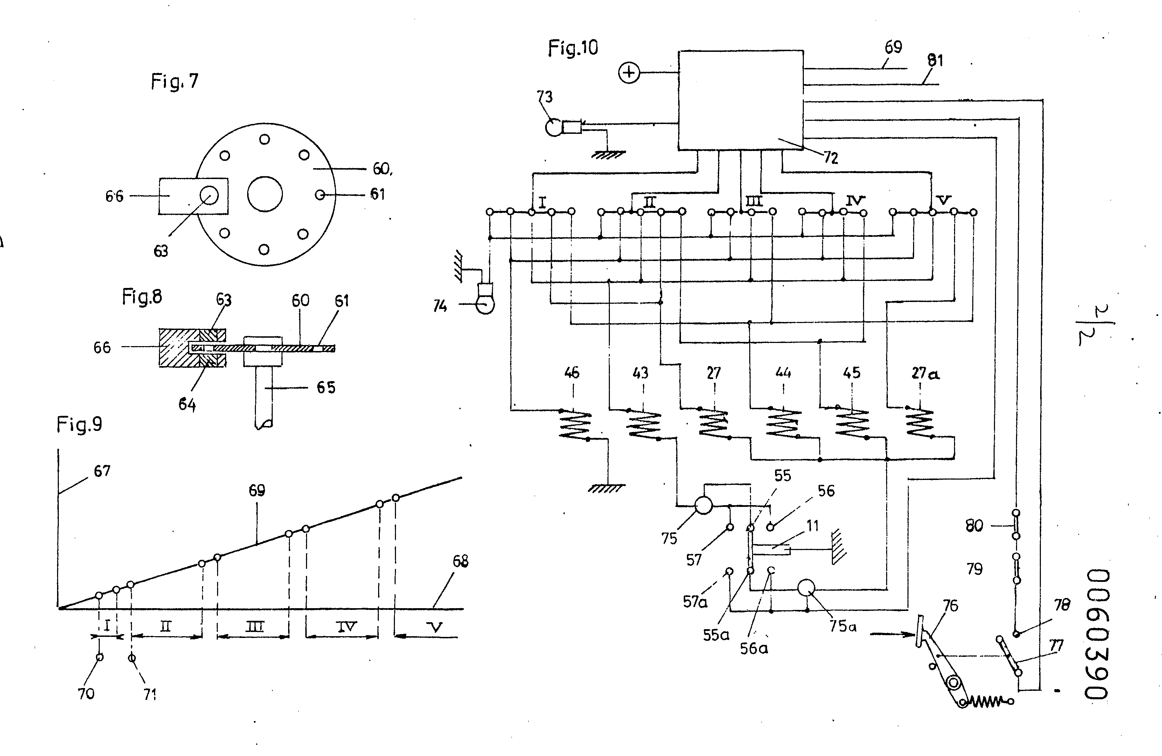

Die Ansteuerung der Ventile ist im Schaltplan der Fig. 10 dargestellt. Dazu ist eine Rechnereinheit 72 vorgesehen, mit den Eingangsleitungen 69 und 81. Über die Leitung 81 können der Rechnereinheit 72 Informationen über die Motorbelastung, beispielsweise den Unterdruck im Ansaugkanal, zugeführt werden. Über die Leitung 69 wird der Rechnereinheit 72 die Information über die Fahrzeuggeschwindigkeit zugeführt. Eine einfache Möglichkeit, ein der Fahrzeuggeschwindigkeit proportionales Impulsfrequenzsignal zu erhalten, ist in den Fig. 7 und 8 gezeigt. Hier wird von einem Fahrzeugrad (Tachoantrieb) eine Lochscheibe 60 mit Löchern 61 angetrieben und mit ihrem Lochkreis zwischen einer Leuchtdiode 63 und einem gegenüberliegenden Fototransistor 64 bewegt. Die Leuchtdiode 63 und der Fototransistor 64 sind dabei ortsfest auf einer Halterung 66 angebracht. Vom Fototransistor 64 werden hier proportional zur Fahrzeuggeschwindigkeit Impulsfolgen abgegeben. In Fig. 9 ist als Gerade 69 der Zusammenhang zwischen der Impulsfrequenz 67 und der Geschwindigkeit 68 gezeigt. Hier ist zusätzlich eingezeichnet, wann die Rechnereinheit 72 bereit ist, von einem Gang in den anderen in Abhängigkeit der Fahrzeuggeschwindigkeit zu schalten. Zwischen den einzelnen Schaltbereichen liegen Intervalle von ca. 5 km/h, die das Pendeln der Automatik verhindern sollen. Geeignete Schaltbereiche sind z. B. 10 bis 18 km/h für den ersten Gang, 20 bis 30 km/h für den zweiten Gang, 35 bis 55 km/h für den dritten Gang, 55 bis 70 km/h für den vierten Gang und ab 75 km/h für den fünften Gang. Gleichzeitig schaltet die Rechnereinheit in Abhängigkeit der Geschwindigkeit beim Anfahren die Schaltautomatik ein und aus. Bei ca. 10 km/h (Punkt 70 in Fig. 9) wird die Automatik von der Rechnereinheit 72 ausgeschaltet und bei 20 km/h (Punkt 71 in Fig. 9) eingeschaltet. Dadurch wird erreicht, daß beim Anfahren im ersten Gang die Automatik unwirksam ist, aber bei Verringerung der Fahrgeschwindigkeit unter 20 km/h der erste Gang noch durch die Automatik geschaltet wird. Wenn nun die Rechnereinheit 72 erkennt, daß eine Schaltung erforderlich wird, d. h. die Fahrzeuggeschwindigkeit nicht mit den Schaltbereichen der Fig. 9 übereinstimmt, greift die Schaltautomatik nicht automatisch in das Getriebe ein, sondern fordert den Fahrer durch das rote Aufleuchten der Lampe 73 zu einer Handlung auf.

Da eine Gangschaltung nur bei geöffneter Kupplung erfolgen kann, muß nun der Fahrer das Kupplungspedal 76 treten, wodurch der Kupplungsschalter 77, 78 geschlossen wird. Jetzt erst wird die Schaltung eines anderen Ganges automatisch durchgeführt. Dadurch wird der Fahrer nicht von einer automatisch durchgeführten Schaltung überrascht. Der Fahrer bestimmt also hier, wann ein Gang geschaltet wird, die Schaltautomatik bestimmt nur, welcher Gang geschaltet wird. Während des Schaltvorgangs kann nun die vorher rote Lampe weiß aufleuchten und in einem geeigneten, dem eingelegten Gang angepaßten Geschwindigkeitsbereich ganz erlöschen.

Bei einem Fahrzeug mit einer hydraulischen Kupplungsautomatik, durch die die Kupplung zum Gangschalten unabhängig von der Motordrehzahl jederzeit plötzlich geöffnet werden kann, erfolgt die Stromzuführung zu der Schaltautomatik über einen am Gaspedal angebrachten Kontakt (der dann dem in Fig. 10 gezeichneten Kupplungsschalter 78, 77 entspräche). Dieser Gaspedalschalter ist dann geschlossen, wenn das Gaspedal losgelassen wurde. Zur Steuerung der Kupplungautomatik sind bei derartigen Fahrzeugen Kontakte oder Sensoren im Knopf des Handschaltknüppels vorgesehen. In Fig. 2 ist eine derartige Ausführung eines Handschaltknüppels dargestellt. Wenn hier der Handschaltknopf gegen die Kraft der Feder 31 nach unten gedrückt wird, schließen die Plättchen 29 und 30 einen Massekontakt, wodurch, wenn zusätzlich das Gaspedal losgelassen wurde, die automatische Kupplung angesteuert wird.

Mit dem Handschalter 79 ist die Schaltautomatik ganz abschaltbar. Dadurch kann z. B. bei Überholmanövern oder bei Bergfahrten unabhängig von der Schaltautomatik mit der Handschaltung gefahren werden. Das Einlegen des ersten Ganges und des Rückwärtsganges wird ohnehin, wie bei anderen Automatikgetrieben ebenfalls üblich, von Hand vorgenommen. Auch wird dann, wenn ein Fahrzeug durch einen eingelegten Gang stillgelegt und gesichert war, vor dem Anlassen des Motors der eingelegte Gang von Hand herausgenommen.

Auch durch den Schalter 80 wird die Schaltautomatik unwirksam gemacht. Beim schnellen Bremsen aus hohen Geschwindigkeiten steht zu wenig Zeit zur Verfügung, die entsprechend der Verringerung der Fahrgeschwindigkeit zugeordneten Gänge nacheinander zu schalten. Der Schalter 80 enthält eine mit Bremsöldruck beaufschlagte Membran, und schaltet die Automatik bei scharfem Abbremsen ab. Nach dem Bremsen kann dann durch die Automatik der geeignete Gang wieder eingeschaltet werden.

Die Rechnereinheit 72 steuert den fünf Gängen entsprechend fünf Schaltprogramme (I bis V in Fig. 10), durch welche die zur Steuerung der betreffenden Gänge notwendigen Elektromagnete 46, 43, 47, 44, 45 und 27a mit Masse verbunden werden. Die Masseverbindungen der Elektromagnete erfolgen über die durch die Gangschaltkolbenstange 11 betätigten Mittelkontakte 55, 55a und Endkontakte 56, 56a und 57, 57a in der Weise, daß der Gangausschaltmagnet 43 seinen Masseanschluß mit Hilfe der Kontaktscheibe 58 über einen der beiden Endkontakte 56 oder 57 erhält. Dadurch wird der Gangschaltkolben 4 in seine Mittellage gebracht und ein eingelegter Gang ausgeschaltet. In dieser Lage wird über den Mittelkontakt 55 einem Unterbrecherorgan 75 ein Stromimpuls vermittelt, der die Masseverbindung des Elektromagneten 43 während diesem Schaltprogramm unterbricht.

In dieser Mittellage des Gangschaltkolbens 4 wird aber über den Mittelkontakt 55a der von der Rechnereinheit ausgewählte Elektromagnet 44 oder 55 und wenn nötig,

0060390

auch einer der Drehmagneten 27 oder 27a mit Masse verbunden, wodurch der Gangschaltkolben 4 in eine seiner Endlagen bewegt wird. In den Endlagen wird nun die Masseleitung zu diesen Elektromagneten durch den Unterbrecher 75a über einen der beiden Endkontakte 56a bzw. 57a während dieses Schaltprogramms unterbrochen.

Die Lampe 73 wird von der Rechnereinheit 72 bei einer fällig werdenden Gangsteuerung eingeschaltet. Die Lampe 74 mit weißem Licht leuchtet während des Schaltvorgangs. Sonst leuchten beide Lampen nicht.

**DIPL.-PHYS. H.-J. NEUBAUER**

Herr

Dieter Delwing

Am Rötel 21

CH-6300 Zug

**PATENTANWALT**

BEIM EUROPÄISCHEN PATENTAMT
ZUGELASSENER VERTRETER

Schillerstraße 83
D-8070 Ingolstadt
Telefon 08 41 / 5 99 99

P 29DE/82/35

1

Patentansprüche

1. Selbsttätig wirkende Schaltvorrichtung für die Gänge eines Mehrstufenfahrzeuggetriebes, bestehend aus einem an eine Förderpumpe angeschlossenen hydraulischen Servomotor, der mittels eines Schaltfingers die Schaltorgane des Getriebes betätigt, des weiteren aus durch Elektromagnete betätigten Steuerventilen zur Steuerung des Servomotors, sowie aus einem durch ein Fahrzeugrad synchron angetriebenen Impulsgeber zur Steuerung der die Elektromagnete betätigenden Steuerströme, dadurch gekennzeichnet, daß zum Betätigen des Schaltfingers (17) in beiden Schaltrichtungen zwei hydraulische Arbeitszylinder (1, 1a) vorgesehen sind, von denen der eine (1) zum Einschalten der Gänge in Druckräumen (2, 3) einen doppelwirkenden Kolben (4) enthält und der andere (1a) zum Ausschalten der Gänge zwei, auf der Kolbenstange (11) frei verschiebbare Schleppkolben (7, 8) aufweist, die voneinander durch einen auf der Kolbenstange (11) vorgesehenen Anschlag oder Bund (9) getrennt sind, wobei im Schleppkolbenzylinder (1a) ein entsprechender Ansatz oder Anschlag (10) vorgesehen ist, so daß zwischen den Stirnseiten des Zylinders (1) und den auf der Kolbenstange beweglichen Schleppkolbens (7 bzw. 8) zwei Druckräume (5 bzw. 6) entstehen, die durch einen Überströmkanal verbunden sind und über einen Anschluß (14) Verbindung mit den Steuerventilen (34) haben, wobei alle Druckräume nur während der Betätigung ihrer Kolben mit der Druckleitung, sonst aber mit der Abflußleitung verbunden sind, so daß die Kolben frei beweglich sind.

2. Schaltvorrichtung nach Anspruch 1, dadurch gekennzeichnet, daß zum Steuern des Servomotors (1, 1a) drei durch Elektromagneten (43, 44, 45) betätigte, unter Federbelastung stehende Ventile (34, 35, 36) dienen, eines (34) von diesen für die Schleppkolbendruckräume (5, 6) und je eines für die Druckräume (2, 3) des Gangschaltkolbens (4), wodurch die entsprechenden Druckräume abwechselnd mit der Druckleitung oder mit der Abflußleitung verbunden sind.

3. Schaltvorrichtung nach den Ansprüchen 1 oder 2, dadurch gekennzeichnet, daß die Masseanschlüsse für die drei Ventilelektromagnete (43, 44, 45) über Kontakte (55, 56, 57) geleitet sind, die durch die Kolbenstange (11) des Gangschaltkolbens (4) geschlossen oder getrennt werden, wobei die Elektromagnete (44, 45) (Gangeinschaltmagnete) an einen Mittelkontakt (55) und der Magnet (43) (Gangausschaltmagnet) an die Endkontakte (56 und 57) angeschlossen sind.

4. Schaltvorrichtung nach Anspruch 3, dadurch gekennzeichnet, daß der Masseanschluß des Elektromagneten (43) (Gangausschaltmagnet) zu den Endkontakten (56 und 57) über ein Unterbrecherorgan (75) geleitet ist, welches die Masseverbindung, wenn der Gangschaltkolben in seine Mittellage gekommen ist, über den Mittelkontakt (55) unterbricht.

5. Schaltvorrichtung nach Anspruch 4, dadurch gekennzeichnet, daß die Masseanschlüsse zu den Elektromagneten (27, 27a, 44, 45) zum Mittelkontakt (55a) über ein Unterbrecherorgan (75) geleitet werden, welches die Masseverbindung, wenn der Gangschaltkolben in eine seiner Endlagen gekommen ist, über einen der Endkontakte (56a oder 57a) unterbricht.

6. Schaltvorrichtung nach einem der Ansprüche 1 bis 5, dadurch gekennzeichnet, daß an eine von der Förderpumpe zu den Steuerventilen (34, 35, 36) führende gemeinsame Druckleitung (48) ein viertes mit einem Elektromagneten (46) betätigtes Ventil (37) angeschlossen ist, das in unbetätigter Lage diese Verbindung unterbricht.

7. Schaltvorrichtung nach Anspruch 6, dadurch gekennzeichnet, daß der Elektromagnet (46) immer gleichzeitig mit den Elektromagneten (43, 44, 45) unter Strom gesetzt wird.

8. Schaltvorrichtung nach einem der Ansprüche 1 bis 7, dadurch gekennzeichnet, daß zur Steuerung der Gänge eine durch den Tachoantrieb (65) elektronisch erzeugte Impulsfrequenz (67) benützt wird, wobei die einzelnen Gänge in zugeordneten Impulsfrequenzbereichen (I, II, III, IV, V) gesteuert werden.

9. Schaltvorrichtung nach einem der Ansprüche 1 bis 8, dadurch gekennzeichnet, daß, nachdem ein Gang gesteuert wurde, der diesem Gang entsprechende Frequenzbereich so lange unwirksam gemacht ist, bis ein anderer Gang gesteuert bzw. geschaltet wurde.

10. Schaltvorrichtung nach einem der Ansprüche 1 bis 9, dadurch gekennzeichnet, daß die Schaltautomatik bei einer Fahrgeschwindigkeit von ca. 20 km/h (71) automatisch eingeschaltet und bei ca. 10 km/h (70) ausge-

4 0060390

schaltet wird.

11. Schaltvorrichtung nach einem der Ansprüche 8 bis 10, dadurch gekennzeichnet, daß die Gangsteuerung durch die Fahrgeschwindigkeit und durch ein der Motorbelastung entsprechendes Signal beeinflußt wird.

12. Schaltvorrichtung nach einem der Ansprüche 1 bis 11, dadurch gekennzeichnet, daß die Schaltautomatik durch einen am Kupplungspedal angebrachten Schalter unter Strom gesetzt ist, der dann geschlossen ist, wenn das Kupplungspedal durchgetreten und damit die Kupplung geöffnet ist.

13. Schaltvorrichtung nach einem der Ansprüche 1 bis 12, dadurch gekennzeichnet, daß die Schaltautomatik durch einen am Gaspedal angebrachten Schalter unter Strom gesetzt ist, der dann geschlossen ist, wenn das Gaspedal losgelassen ist.

14. Schaltvorrichtung nach einem der Ansprüche 1 bis 13, dadurch gekennzeichnet, daß die Stromzuführung zu der Schaltautomatik mit Hilfe eines durch den Bremsöldruck betätigten Membranschalters bei einem gewissen Öldruck ausgeschaltet ist.

15. Schaltvorrichtung nach einem der Ansprüche 1 bis 14, dadurch gekennzeichnet, daß, wenn eine Gangschaltung fällig ist, ein farbiges Warnlicht (73) eingeschaltet ist, das während des Schaltvorganges in ein weißes Licht (74) übergeht und nach Beendigung des Schaltvorganges gelöscht ist.

16. Schaltvorrichtung nach einem der Ansprüche 1 bis 15, dadurch gekennzeichnet, daß die Kolbenstange (16) mit dem kardanisch gelagerten in Längsachse des Fahrzeuges vor und zurück bewegbaren Schaltfingers (17) gelenkig verbunden ist und für das Querschwenken des Schaltfingers (17) zur Schaltgassenwahl zwei Drehmagnete (27, 27a) vorgesehen sind.

17. Schaltvorrichtung nach einem der Ansprüche 1 bis 16, dadurch gekennzeichnet, daß der Schaltfinger (17) auch als Handschaltknüppel (32) ausgebildet ist und an seinem oberen Ende einen elektrischen Kontakt (29, 30) aufweist, durch den ein Stromkreis zu einer hydraulischen Kupplungsbetätigung geöffnet oder geschlossen werden kann.

0060390

P 29DE/82/35

1/2

Fig.1 Fig.2 Fig.3 Fig.4 Fig.5 Fig.6

Fig. 7

Fig.8

Fig.9

Fig.10

2/2

0060390

| EINSCHLÄGIGE DOKUMENTE | | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | |
| A | DE - A - 1 480 497 (VEB WTZ AUTOMOBIL-BAU) <br> * Ansprüche 1 bis 7, Seite 7, Zeile 16 bis Seite 9, Zeile 13; Fig. 1, 2 * | 1-5,12 | B 60 K   20/10 <br> F 16 H   5/28 <br> F 16 H   5/60 <br> F 16 H   5/74 |
| A | GB - A - 1 158 829 (VEB IFA GETRIEBE-WERKE) <br> * Seite 2, Zeilen 45 bis 110; Fig. 2 * | 1-5 | |
| A | US - A - 2 931 237 (T. BACKUS) <br> * Spalte 8, Zeilen 32 bis 67; Fig. 3 * | 1,2 | **RECHERCHIERTE SACHGEBIETE (Int. Cl.³)** |
| A | US - A - 4 148 231 (G.E. REDZINSKI) <br> * Ansprüche 1, 2, 8; Fig. 3 * | 8,9,15 | B 60 K   20/00 <br> F 16 H   5/00 |
| A | DE - C - 1 185 068 (FAB. ITALIANA MAGNETI MARELLI) <br> * Anspruch 1 * | 12 | |
| A | US - A - 3 088 337 (R.W. BEMMANN et al.) <br> * Ansprüche 1 bis 3 * | 8,11 | **KATEGORIE DER GENANNTEN DOKUMENTE** |
| A | DE - B2 - 1 530 825 (VOITH GETRIEBE) <br> * Ansprüche 1 bis 3 * | 11,17 | X: von besonderer Bedeutung allein betrachtet <br> Y: von besonderer Bedeutung in Verbindung mit einer anderen Veröffentlichung derselben Kategorie <br> A: technologischer Hintergrund <br> O: nichtschriftliche Offenbarung <br> P: Zwischenliteratur <br> T: der Erfindung zugrunde liegende Theorien oder Grundsätze |
| A | US - A - 3 808 903 (J. SAUER) <br> & DE - A - 2 145 667 | | E: älteres Patentdokument, das jedoch erst am oder nach dem Anmeldedatum veröffentlicht worden ist <br> D: in der Anmeldung angeführtes Dokument <br> L: aus andern Gründen angeführtes Dokument |
|  |  |  | &: Mitglied der gleichen Patentfamilie, übereinstimmendes Dokument |

Der vorliegende Recherchenbericht wurde für alle Patentansprüche erstellt.

| Recherchenort | Abschlußdatum der Recherche | Prüfer |
|---|---|---|
| Berlin | 16-04-1982 | LEMBLE |

EPA form 1503.1   06.78